# EUROPÄISCHE PATENTSCHRIFT

(11) **EP 1 969 533 B1**
(45) Veröffentlichungstag und Bekanntmachung des Hinweises auf die Patenterteilung: **04.07.2012**
(21) Anmeldenummer: 06830183.7
(22) Anmeldetag: 29.11.2006
(51) Int. Cl.: G06K 19/073, G06K 19/077, G06K 19/07

(54) **DOKUMENT MIT EINEM DATENSPEICHER, VORRICHTUNG UND VERFAHREN ZUM LESEN EINES FUNKETIKETTS UND COMPUTERPROGRAMMPRODUKT**
DOCUMENT COMPRISING A DATA MEMORY, DEVICE AND METHOD FOR READING AN RFID TAG, AND COMPUTER PROGRAM PRODUCT
DOCUMENT COMPRENANT UNE MEMOIRE D'INFORMATIONS, DISPOSITIF ET PROCEDE DE LECTURE D'UNE ETIQUETTE RFID, ET PRODUIT DE PROGRAMME INFORMATIQUE

(30) Priorität: 27.12.2005 DE 102005062827
(43) Veröffentlichungstag der Anmeldung: 17.09.2008
(73) Patentinhaber: Bundesdruckerei GmbH, 10958 Berlin (DE)
(72) Erfinder: MUTH, Oliver, 12277 Berlin (DE); PFLUGHOEFFT, Malte, 13347 Berlin (DE); HOPPE, Andreas, 12683 Berlin (DE); PASCHKE, Manfred, 16352 Basdorf (DE); DRESSEL, Olaf, 14641 Wustermark (DE)
(74) Vertreter: Richardt Patentanwälte GbR
(86) Internationale Anmeldenummer: PCT/EP2006/069039
(87) Internationale Veröffentlichungsnummer: WO 2007/074011

(56) Entgegenhaltungen:
- WO-A-2005/104022
- US-A1- 2003 116 634

## Beschreibung

Die Erfindung betrifft ein Dokument mit einem Datenspeicher, welches insbesondere als sogenannte Chipkarte oder Smart Card in kontaktbehafteter, kontaktloser oder Dual-Interface Ausführung ausgebildet sein kann. Bei dem Dokument kann es sich zum Beispiel um einen Kartenaufbau, insbesondere einer Smart Card handeln, oder um ein Papierdokument, wie zum Beispiel einen elektronischen Personalausweis.

Aus dem Stand der Technik sind verschiedene Funk-Erkennungssysteme bekannt, die auch als Radio Frequency Identification (RFID) Systeme bezeichnet werden. Vorbekannte RFID-Systeme beinhalten im Allgemeinen zumindest einen Transponder und eine Sende-Empfangseinheit. Der Transponder wird auch als RFID-Etikett, RFID-Chip, RFID-Tag, RFID-Label oder Funketikett bezeichnet; die Sende-Empfangseinheit wird auch als Lesegerät oder Reader bezeichnet. Ferner ist oft die Integration mit Servern, Diensten und sonstigen Systemen, wie zum Beispiel Kassensystemen oder Warenwirtschaftssystemen über eine so genannte Middle Ware vorgesehen.

Die auf einem RFID-Transponder gespeicherten Daten werden über Radiowellen verfügbar gemacht. Bei niedrigen Frequenzen geschieht dies induktiv über ein Nahfeld, bei höheren Frequenzen über ein elektromagnetisches Fernfeld. Die Entfernung, über die ein RFID-Transponder angesprochen und ausgelesen werden kann, schwankt aufgrund der Ausführung (passiv / aktiv), dem benutzten Frequenzband, der Sendestärke und anderen Umwelteinflüssen zwischen wenigen Zentimetern und mehr als einem Kilometer.

Ein RFID-Transponder beinhaltet üblicherweise einen Mikrochip und eine Antenne, die in einem Träger oder Gehäuse untergebracht oder auf ein Substrat aufgedruckt sind. Aktive RFID-Transponder verfügen ferner über eine Energiequelle, wie zum Beispiel eine Batterie.

RFID-Transponder sind für verschiedene Dokumente einsetzbar, insbesondere in Chipkarten, beispielsweise zur Realisierung einer elektronischen Geldbörse oder für Electronic Ticketing, oder werden in Papier, wie zum Beispiel in Wert- und Sicherheitsdokumenten, insbesondere Geldscheinen und Ausweisdokumenten, integriert.

Aus der DE 201 00 158 U1 ist beispielsweise eine Identifikations- und Sicherheitskarte aus laminierten und / oder gespritzten Kunststoffen bekannt, die einen integrierten Halbleiter mit einer Antenne zur Durchführung eines RFID-Verfahrens beinhaltet. Aus der DE 10 2004 008 841 A1 ist ferner ein buchartiges Wertdokument, wie zum Beispiel ein Passbuch bekannt geworden, welches eine Transpondereinheit beinhaltet.

Solche Sicherheits- oder Wertdokumente werden im Stand der Technik zum Teil als Chipkarten realisiert. Diese können mit einer kontaktbehafteten oder kontaktlosen Schnittstelle, beispielsweise einem RFID-Interface, ausgestattet sein oder mit einer Schnittstelle, die sowohl eine drahtgebundene als auch eine drahtlose Kommunikation mit einem Chipkarten-Terminal zulässt. Im letzteren Fall spricht man auch von so genannten Dual-Interface Chipkarten. Chipkarten-Kommunikationsprotokolle und - verfahren sind zum Beispiel In der Norm ISO 14443 festgelegt.

Chipkarten, insbesondere RFID Chipkarten, mit einem integrierten Druckschalter sind bereits aus dem Stand der Technik bekannt, insbesondere aus US 6 863 220 B2, WO 99/16019, EP 1 173 825 B1, DE 199 35 528 A1, DE 196 45 083 C2, EP 0 946 926 B1, EP 0 562 292 B1, EP 0 557 934 B1. Eine Chipkarte mit zwei Antennenspulen ist aus DE 10 2004 043 408 A1 bekannt.

Um ein ungewolltes Auslesen der RFID Chipkarte zu verhindern, muss zunächst der Druckschalter von einem Benutzer manuell betätigt werden, so dass das Auslesen ermöglicht wird.

Aus der WO2005/104022 A1 ist ein RFID-Tag mit einer variierbaren Resonanzfrequenz bekannt. Hierdurch soll die Kopplung zwischen den Tags reduziert werden.

Der Erfindung liegt dem gegenüber die Aufgabe zu Grunde, ein verbessertes Dokument mit einem Datenspeicher zu schaffen sowie eine Vorrichtung und ein Verfahren zum Lesen eines Funketiketts und ein Computerprogrammprodukt.

Die der Erfindung zu Grunde liegenden Aufgaben werden jeweils mit den Merkmalen der unabhängigen Patentansprüche gelöst. Bevorzugte Ausführungsformen der Erfindung sind In den abhängigen Patentansprüchen angegeben.

Erfindungsgemäß wird ein Dokument mit einem Datenspeicher geschaffen, welches eine erste Antenne zur Datenübertragung auf einer ersten Frequenz und eine Schaltvorrichtung aufweist. Die Schaltvorrichtung hat einen ersten Schaltzustand, in dem die Datenübertragung von oder zu dem Datenspeicher nicht möglich ist, und einen zweiten Schaltzustand, in dem die Datenübertragung von oder zu dem Datenspeicher möglich ist. In einer Ausführungsform verfügt das Dokument zum Schalten der Schaltvorrichtung über eine zweite Antenne. Diese dient zum Empfang eines Signals auf einer zweiten Frequenz zur Änderung des Schaltzustands der Schaltvorrichtung.

Die ersten und zweiten Antennen sind dabei so ausgebildet, dass die ersten und zweiten (Resonanz-)Frequenzen sich voneinander unterscheiden.

In einer Ausführungsform der Erfindung muss das Dokument zunächst durch das mittels der zweiten Antenne empfangene Signal selektiv aktiviert werden, wodurch die Schaltvorrichtung von ihrem ersten Schaltzustand in den zweiten Schaltzustand übergeht. Solange sich die Schaltvorrichtung in dem zweiten Schaltzustand befindet, kann über die erste Antenne auf den Datenspeicher lesend und / oder schreibend zugegriffen werden. Hierbei kann die Schaltvorrichtung entweder beim Empfang eines Signals von dem einen in den anderen Schaltzustand übergehen und durch dem Empfang des selben oder eines anderen Signals wieder in den Ausgangszustand versetzt werden, oder aber die Schaltvorrichtung geht nur für die Zeitdauer des Schaltsignals in den anderen Schaltzustand über.

Dies ist besonders vorteilhaft, wenn sich mehrere der Dokumente in einem geringen räumlichen Abstand zueinander befinden. In diesem Fall werden Interferenzen verringert oder vermieden, indem immer nur eine Untermenge, vorzugsweise ein einziges Dokument, zu einem Zeitpunkt ausgewählt und in seinen zweiten Schaltzustand gebracht wird, um auf den Datenspeicher dieses Dokuments zuzugreifen. Nachdem der Zugriff auf den Datenspeicher erfolgt ist, geht die Schaltvorrichtung beispielsweise nach einer gewissen Zeit oder nach Empfang eines weiteren Signals wieder in den ersten Schaltzustand über.

Ferner ist dies zur Realisierung von Hochsicherheitsanwendungen vorteilhaft. Die Notwendigkeit der Aktivierung des Dokuments mittels eines auf der zweiten Frequenz ausgesendeten Signals bevor ein Zugriff auf den Datenspeicher erfolgen kann, kann nämlich als Zugriffsschutz für den Datenspeicher verwendet werden. Beispielsweise kann dadurch eine besonders sichere Zugangskontrolle zu einem geschützten Bereich geschaffen werden.

In einer Ausführungsform der Erfindung liegen die ersten und zweiten Frequenzen in verschiedenen Frequenzbereichen. Als Frequenzbereiche kommen zum Beispiel der Längst- und Langwellenbereich, Kurzwellenbereich, Radio- und Mikrowellenbereich in Frage. Beispielsweise liegt die erste Frequenz in einem Frequenzbereich oberhalb 1 MHz, vorzugsweise oberhalb 2 MHz, und die zweite Frequenz liegt unterhalb 1 MHz, vorzugsweise unterhalb 500 KHz.

In einer Ausführungsform der Erfindung beinhaltet die Schaltvorrichtung zumindest einen steuerbaren Halbleiterschalter, der durch Empfang des Signals auf der zweiten Frequenz geschaltet wird. Der Halbleiterschalter kann zu einer bistabilen Kippschaltung, das heißt einem so genannten Flip-Flop, gehören. Durch den Empfang des Signals kippt die Schaltvorrichtung in ihren jeweils anderen Schaltzustand.

Nach einer weiteren Ausführungsform beinhaltet die Schaltvorrichtung einen Schalter, welcher auf Basis eines Transistors arbeitet. Ein über die Hilfsfrequenz empfangenes Signal schaltet somit auf elektronischem Wege den Haupt-Stromkreis. Besonders bevorzugt besteht dieser Schalter aus organischem Material, welches die Eigenschaften eines Transistors hat. Eine mögliche Ausführungsform ist zum Beispiel durch den Einsatz von PEDOT:PSS Transistoren gegeben.

Nach einer weiteren Ausführungsform der Erfindung ist die Schaltvorrichtung durch eine aufgrund des drahtlos empfangenen Signals induzierte lokale Temperaturerhöhung schaltbar. Dieses Sicherheitsmerkmal könnte umgangen werden, indem das ganze Dokument erwärmt bzw. abgekühlt wird. Hier schafft ein weiterer Schalter Abhilfe, der bei einer Temperaturänderung im umgekehrten Sinne wie die Schaltvorrichtung schaltet, wobei der weitere Schalter an einer anderen Stelle als die Schaltvorrichtung angeordnet ist, und deshalb das Dokument bei einer das ganze Dokument betreffenden Temperaturänderung abschalten kann.

Nach einer weiteren Ausführungsform der Erfindung ist das Haupt-Dokument, also beispielsweise der Reisepass, nicht erfindungsgemäß ausgebildet, und beinhaltet neben ein oder mehreren erfindungsgemäßen Teil-Dokumenten, also z.B. elektronischen Visa, auch nicht erfindungsgemäße Teil-Dokumente.

Nach einer weiteren Ausführungsform der Erfindung sind Hilfs-Frequenzen für die Selektion der Teil-Dokumente fest vorgegeben und in einem nicht-flüchtigen Speicher des Lesegeräts permanent gespeichert. Ein Auslesen aus einem Index des Haupt-Dokuments kann dadurch entfallen.

Nach einer weiteren Ausführungsform der Erfindung bestehen der Schalter der Schaltvorrichtung und/oder die Antenne aus einem lichtsensitiven Material, also einem Photoleiter; ein Zugriff auf den Datenspeicher ist dann nur bei ausreichendem Lichteintrag möglich.

In einer Ausführungsform der Erfindung wird durch den Empfang des Signals ein Formänderungseffekt ausgelöst, wodurch sich der Schaltzustand der Schaltvorrichtung ändert. Beispielsweise hat die Schaltvorrichtung ein Element, welches den Formänderungseffekt aufweist. Das Element kann auf einen mechanischen Schaltkontakt der Schaltvorrichtung wirken, um diesen aufgrund der Auslösung des Formänderungseffekts reversibel oder irreversibel zu öffnen oder zu schließen.

Nach einer Ausführungsform der Erfindung ist der Formänderungseffekt durch eine elektrische Spannung, einen elektrischen Strom, eine Temperaturänderung, eine Druckänderung, Strahlung, ein elektrisches Feld, ein magnetisches Feld und / oder ein elektromagnetisches Feld auslösbar. Wird das zweite Signal nicht direkt in der Form eingekoppelt, die zum Formänderungseffekt führt, so wird das von einer zweiten Antenne empfangene Signal in die entsprechende physikalische Größe umgesetzt, welche zur Auslösung des Formänderungseffekts dient.

Nach einer Ausführungsform der Erfindung handelt es sich bei dem Formänderungseffekt um einen piezo-elektrischen Effekt. Hierzu ist beispielsweise das Element der Schaltvorrichtung, welches auf den Schaltkontakt wirken kann, als Piezo-Kristall ausgebildet. Aufgrund des Empfangs des Signals durch die zweite Antenne resultiert eine elektrische Spannung, die den piezo-elektrischen Effekt auslöst, so dass das Element eine Formänderung erfährt und auf den Schaltkontakt eine Kraft ausübt, um den Schalter zu öffnen oder zu schließen. Für eine irreversible Öffnung des Schalters kann das Element aufgrund seiner Formänderung eine Leiterbahn durchtrennen.

Eine weitere Ausführungsform beinhaltet ein Schaltelement als lichtsensitives Element, welches durch Anregung durch Licht, auch spezieller Wellenlängen, seine Leitfähigkeit verändert und direkt oder über eine nachgeordnete elektonische Schaltung die Leitfähigkeit herstellt oder verhindert.

Nach einer weiteren Ausführungsform wird durch mehrere Sensoren ein Bild Aufgenommen, so dass bei hinreichender Übereinstimmung des Bildes mit einem gespeicherten Referenz-Muster die Freischaltung ausgelöst werden kann.

Nach einer weiteren Ausführungsform erfolgt die Freischaltung durch ein lokales statisches oder dynamisches Magnetfeld.

Nach einer weiteren Ausführungsform erfolgt die Freischaltung nur dann, wenn die Karte vibriert oder beschleunigt und/oder bewegt wird. Ein von einem entsprechenden Sensor erfasstes Signal wird hierzu ausgewertet.

In einer Ausführungsform der Erfindung beinhaltet die Schaltvorrichtung Materialien unterschiedlicher thermischer Ausdehnungskoeffizienten, wie zum Beispiel einen Bimetallstreifen. Bei einer Temperaturänderung verformt sich der Bimetallstreifen aufgrund der unterschiedlichen thermischen Ausdehnungskoeffizienten, so dass der Schaltkontakt der Schaltvorrichtung reversibel oder irreversibel geschlossen oder geöffnet wird. Eine solche Temperaturänderung kann bevorzugt aufgrund des Empfangs des Signals erfolgen, wenn aufgrund des Signals ein Strom fließt, der zu der Temperaturänderung führt.

Optional kann in das Dokument an anderer Stelle ein analoger Schalter eingebaut werden, der jedoch bei einer identischen Temperaturänderung öffnet, wenn der erste Schalter schließt. Auf diese Weise kann ausgeschlossen werden, dass, wenn die Temperaturänderung mittels eines elektromagnetischen Signals erzeugt werden soll, dieses durch einfaches Erwärmen der Karte umgangen werden kann.

In einer weiteren Ausführungsform der Erfindung handelt es sich bei dem Formänderungseffekt um einen Formgedächtniseffekt.

Beispielsweise dient ein sogenanntes Formgedächtniselement zum reversiblen oder irreversiblen Öffnen oder Schließen des Schaltkontakts der Schaltvorrichtung.

Das Formgedächtniselement kann aus einer geeigneten Legierungen bestehen, beispielsweise einem sog. Shape-Memory-Alloy (SMA). Beispiele hierfür sind die Legierungen NiTi-, NiTiNb und CuZnAl. Weitere Formgedächtnislegierungen sind aus "Legierungen mit Formgedächtnis", Dieter Stöckel, Erhard Hornbogen, Expert-Verlag, 1988, ISBN 3-8169-0323-1 sowie aus Ullmanns Encyclopedia of Industrial Chemistry, Electronic Release 2005, Wiley Verlag bekannt. Alternativ oder zusätzlich können auch leitfähige Kunststoffe, wie sie aus dem Gebiet der Printable Electronic bzw. Polymereelktronik bekannt sind, eingesetzt werden.

Bei dem Formgedächtniseffekt handelt es sich prinzipiell um einen reversiblen Effekt. Hierzu kann ein Einwege-Effekt mit oder ohne einer zusätzlichen mechanischen Rückstelleinrichtung verwendet werden. Dieser reversible Effekt beruht darauf, dass so genannte Memory-Legierungen im martensitischen Zustand eine wesentlich geringere Festigkeit aufweisen als in der Hochtemperatur-Phase. Durch Erwärmen wird also die Formänderung des Formgedächtniselementes in die Hochtemperaturform, z. B. durch einen elektrischen Strom bewirkt, der aufgrund des von der zweiten Antenne empfangenen Signals fließt. Nach Beendigung des Stromfluss nimmt das Antriebselement nicht automatisch seine Ausgangsform wieder ein. Das Formgedächtniselement kann prinzipiell durch eine durch geeignete mechanische Mittel aufgebrachte Kraft wieder in die Ausgangsform zurückgebracht werden. Je nach Ausführungsform der Erfindung sind solche Mittel vorhanden oder nicht vorhanden, um das Dokument reversibel oder irreversible aktivierbar bzw. deaktivierbar zu machen.

Alternativ wird ein Material eingesetzt, das einen Zweiwege-Effekt aufweist. Beim Zweiwege-Effekt "erinnert" sich das Material sowohl an die Hochtemperatur- als auch an eine Niedrigtemperaturform. Als Spezialfall des Zweiwege-Effekts können auch Materialien, die einen sog. All-Round-Effekt aufweisen, eingesetzt werden.

In einer Ausführungsform der Erfindung ist die Schaltvorrichtung durch Induktion einer Phasenumwandlung schaltbar. Beispielsweise beinhaltet die Schaltvorrichtung eine Substanz, die von einer leitfähigen, halbleitenden oder nicht leitenden Phase in eine jeweils andere Phase übergeht. Die Induktion einer solchen Phasenumwandlung, beispielsweise von einer metallischen in eine nicht metallische Phase, kann durch geeignete Wahl von Druck und / oder Temperatur induziert werden, welche bevorzugt aufgrund des Empfangs des Signals über eine zweite Antenne erfolgt.

Beispielsweise kann die Schaltvorrichtung hierzu lod beinhalten, dessen Phase durch Aufbringung eines hohen Drucks umgewandelt werden kann. Die Schaltvorrichtung kann auch Phosphor beinhalten, welches in den Formen weißer, roter, violetter oder schwarzer Phosphor vorliegen kann. Durch geeignete Wahl von Druck und Temperatur kann das Phosphor in seine verschiedenen Zustände überführt werden, beispielsweise aus der leitfähigen Phase des violetten Phosphors in die halbleitende Phase des schwarzen Phosphors.

Wenn eine solche Phase thermodynamisch instabil ist, so geht die Phase nach einer bestimmten Zeit durch erneute Phasenumwandlung wieder zum Beispiel in eine nicht metallische Phase über, so dass der Kontakt wieder unterbrochen wird. Wenn beispielsweise eine leitfähige (metallische) Phase thermodynamisch instabil ist, so erfolgt nach einer bestimmten Zeit eine Phasenumwandlung zur nicht leitfähigen (nicht metallischen) Phase, so dass der Kontakt wieder unterbrochen wird.

In einer Ausführungsform der Erfindung beinhaltet das Dokument mehrere Teil-Dokumente. Jedem der Teil-Dokumente ist eine andere zweite Frequenz zugeordnet, um eines der Teil-Dokumente gezielt aktivieren zu können. Dies ist besonders vorteilhaft, wenn es sich bei dem Dokument um einen elektronischen Reisepass mit einem oder mehreren elektronischen Visadokumenten handelt. Beispielsweise werden die elektronischen Visadokumente in den elektronischen Reisepass eingeklebt, wie es auch für herkömmliche Reisepässe der Fall ist. Aufgrund der unmittelbaren räumlichen Nähe der verschiedenen Antennen des Dokuments und der Teil-Dokumente, d.h. der Visa, kann es zu Interferenzen und Wechselwirkungen zwischen den Antennen kommen, welche erfindungsgemäß durch gezielte Aktivierung bzw. Deaktivierung des elektronischen Reisepasses bzw. eines der Visa vermindert werden können.

In einer Ausführungsform der Erfindung sind die zweiten Frequenzen des Dokuments bzw. der Teil-Dokumente nach einem vorgegebenen Muster voneinander beabstandet. Dieses vorgegebene Muster kann zum Auslesen des Dokuments bzw. der Teil-Dokumente verwendet werden, indem das Dokument bzw. die Teil-Dokumente nacheinander auf den durch das Muster vorgegebenen Frequenzen angesprochen werden.

In einer Ausführungsform der Erfindung ist nur die zweite Frequenz des Haupt-Dokuments, das heißt zum Beispiel des elektronischen Reisepass, per Konvention vorgegeben. In dem Speicher des Haupt-Dokuments sind die Werte der Frequenzen der zum Auslesen der Teil-Dokumente des Haupt-Dokuments gespeichert. Um die Teil-Dokumente anzusprechen, werden also zunächst diese zweiten Frequenzen aus dem Datenspeicher des Haupt-Dokuments ausgelesen. Den zweiten Frequenzen können auch Metadaten zugeordnet sein, welche beispielsweise das einer der zweiten Frequenzen zugeordnete Teil-Dokument beschreiben. Auf der Basis dieser Meta-Daten kann mittels eines Lesegeräts eines der Teil-Dokumente gezielt ausgewählt werden. Dadurch kann vermieden werden, dass sämtliche Visa eines elektronischen Reisepasses bei einer Grenzkontrolle ausgelesen werden müssen.

In einem weiteren Aspekt betrifft die Erfindung eine Vorrichtung zum Lesen eines Funketiketts. Bei dem Funketikett kann es sich um ein erfindungsgemäßes Dokument handeln, oder das Funketikett kann Teil eines erfindungsgemäßen Dokuments sein.

Die Vorrichtung hat eine erste Antenne zum Lesen des Funketiketts auf einer ersten Frequenz und eine zweite Antenne zum Senden eines Signals auf einer zweiten Frequenz zur Auswahl des Funketiketts aus einer Menge von Funketiketten, wobei jedes Funketikett der Menge von Funketiketten eine zugeordnete zweite Frequenz hat, wobei sich die zweiten Frequenzen der Funketiketten sowohl untereinander und als auch von der ersten Frequenz unterscheiden. Vorzugsweise ist die zweite Antenne so ausgebildet, dass sie auf allen in Frage kommenden zweiten Frequenzen senden kann. In diesem Fall ist die Vorrichtung universell zum Lesen beispielsweise der VisaDokumente verschiedener Staaten, denen jeweils verschiedene zweite Frequenzen zugeordnet sind, in der Lage. In einer weiteren Ausführungsform kann anstelle der zweiten Antenne auch ein Gerät zur Erzeugung einer der oben genannten physikalischen Größen eingebaut sein, um den Schaltvorgang zu bewirken.

In einem weiteren Aspekt betrifft die Erfindung ein Verfahren zum Lesen eines Funketiketts auf einer ersten Frequenz, wobei das Funketikett durch ein Signal auf einer zweiten Frequenz ausgewählt wird, und wobei die ersten und zweiten Frequenzen voneinander beabstandet sind.

In einem weiteren Aspekt betrifft die Erfindung ein Computerprogrammprodukt mit von einem Mikroprozessor beispielsweise eines Lesegeräts ausführbaren Programminstruktionen zur Durchführung eines solchen Verfahrens.

Ausführungsformen der vorliegenden Erfindung sind also besonders vorteilhaft zur Behebung von Interferenzproblem bei mehreren Dokumenten, insbesondere Visa, in einem Pass. In einem Pass können mehrere elektronische Visa unmittelbar übereinander liegend angeordnet sein, was bei mehreren Visa einen drahtlosen Zugriff schwer oder unmöglich machen kann. Hier kann die die Erfindung Abhilfe schaffen, indem zunächst das interessierende Visum durch Aktivierung von dessen Schaltvorrichtung ausgewählt wird.

Ausführungsformen der vorliegenden Erfindung sind ferner besonders vorteilhaft für Hochsicherheitsanwendungen. Die Datenübertragung von und zu dem Dokument erfolgt über die erste Antenne auf der ersten Frequenz. Dadurch ist ein Sicherheitsmerkmal gegeben. Durch die Erfindung wird ein zusätzlicher Schutzmechanismus geschaffen, indem vor der Erfüllung des zuerst genannten Sicherheitsmerkmals zunächst ein weiteres Sicherheitsmerkmal erfüllt sein muss, nämlich die Aktivierung der Schaltvorrichtung auf einer zweiten Frequenz über eine andere Antenne.

Im weiteren werden Ausführungsformen der Erfindung mit Bezugnahme auf die Zeichnungen näher erläutert. Es zeigen:
- Figur 1: ein Blockdiagramm einer Ausführungsform des erfindungsgemäßen Dokuments und einer erfindungsgemäßen Vorrichtung,
- Figur 2: ein Flussdiagramm einer Ausführungsform eines erfindungsgemäßen Verfahrens,
- Figur 3: ein Blockdiagramm einer weiteren Ausführungsform des erfindungsgemäßen Dokuments und einer erfindungsgemäßen Vorrichtung,
- Figur 4: ein Flussdiagramm einer weiteren Ausführungsform eines erfindungsgemäßen Verfahrens,
- Figur 5: eine Ausführungsform der Schaltvorrichtung des Dokuments bei geöffnetem Schaltkontakt,
- Figur 6: die Schaltvorrichtung der Figur 5 bei geschlossenem Schaltkontakt,
- Figur 7: eine Ausführungsform eines erfindungsgemäßen Dokuments mit mehreren Schaltvorrichtungen zum Trennen oder Verbinden der Leiterbahnen einer Antenne,
- Figur 8: eine Ausführungsform eines erfindungsgemäßen Dokuments, bei der die Deaktivierung oder Aktivierung über eine Phasenumwandlung induzierbar ist.

Elemente in den nachfolgenden Figuren, die einander entsprechen, sind mit gleichen Bezugszeichen gekennzeichnet.

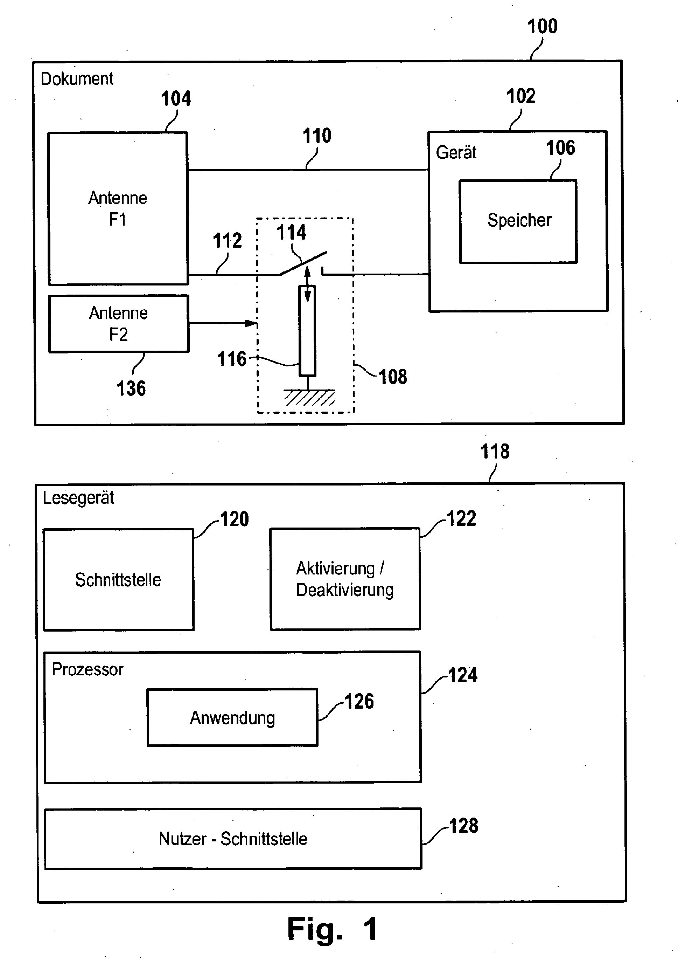

Die Figur 1 zeigt das Blockdiagramm eines Dokuments 100 mit einem elektronischen Gerät 102. Das elektronische Gerät 102 ist mit dem Dokument 100 fest verbunden. Beispielsweise ist das elektronische Gerät 102 in einer Schicht des Dokuments 100 eingebettet, wie zum Beispiel einlaminiert.

Beispielsweise beinhaltet das elektronische Gerät 102 ein Modul, welches einen integrierten elektronischen Schaltkreis umfasst. An das Gerät 102 ist eine Antenne 104 angeschlossen, die zum Beispiel in mehreren Windungen entlang eines Randbereichs des Dokuments 100 verläuft. Die Antenne 104 dient zur drahtlosen Datenübertragung auf einer Frequenz F1.

Das Dokument 100 kann einen Träger aus Papier oder Kunststoff aufweisen oder aus mehreren Papier- und / oder Kunststoffschichten bestehen. Insbesondere kann das Dokument 100 als sogenannte Chipkarte realisiert sein, wobei in diesem Fall das Modul des Geräts 102 als sogenanntes Chipkartenmodul ausgebildet ist. Zu an sich vorbekannten Chipkartenmodulen und Standards wird hierzu auf das das "Handbuch der Chipkarten", Wolfgang Rankl, Wolfgang Effing, Hansa Verlag 1999 verwiesen, insbesondere Kapitel 3.2.2 auf Seite 71 ff.

Bei dem Dokument 100 kann es sich um ein Wert- oder Sicherheitsdokument handeln, insbesondere um ein Identifikationsdokument, wie zum Beispiel einen Personalausweis, Reisepass oder ein Visum.

Das elektronische Gerät 102 beinhaltet einen vorzugsweise nicht-flüchtigen elektronischen Speicher 106. Beispielsweise sind in dem Speicher 106 Daten zur Person des Trägers des Dokuments 100 gespeichert, wie zum Beispiel Name, Anschrift, Geburtsdatum, Geschlecht sowie das Ausstellungsdatum, die Gültigkeit und /oder die ausstellende Behörde des Dokuments 100. Alternativ oder zusätzlich können auch biometrische Daten, wie zum Beispiel Fingerabdruckdaten oder andere biometrische Daten des Trägers des Dokuments 100 in dem Speicher 106 für eine Überprüfung der Gültigkeit des Dokuments 100 abgelegt sein. Dies ist insbesondere zur Realisierung eines elektronischen Reisepasses, eines elektronischen Visums oder eines elektronischen Zugangsschlüssels vorteilhaft.

Für einen Zugriff auf den Speicher 106 ist es erforderlich, dass das elektronische Gerät 102 aktiviert ist. Die Aktivierung des elektronischen Geräts 102 erfolgt mittels einer extern ansprechbaren Schaltvorrichtung 108. In der hier betrachteten Ausführungsform ist das elektronische Gerät 102 über Leiterbahnen 110 und 112 mit der Antenne 104 verbunden, wobei die Leiterbahn 112 durch ein Schaltelement 114 der Schaltvorrichtung 108 unterbrochen ist. Bei geöffnetem Schaltelement 114 ist das elektronische Gerät 102 deaktiviert, da es von seiner Antenne 104 getrennt ist. Ein Zugriff auf den Speicher 106 ist also in diesem Zustand nicht möglich.

Die Schaltvorrichtung 108 hat ein Element 116, welches auf das Schaltelement 114 wirken kann. Das Element 116 ist extern ansprechbar, um das Schaltelement 114 reversibel oder irreversibel zu öffnen oder zu schließen, um dadurch das Gerät 102 reversibel oder irreversibel zu aktivieren oder zu deaktivieren.

Bei dem Element 116 kann es sich um einen Aktor handeln, der aufgrund eines Formänderungseffekts seine Form ändern kann, um so auf das Schaltelement 114 zu wirken, so dass durch das Schaltelement 114 der Kontakt geöffnet oder geschlossen wird.

Bei dem Formänderungseffekt kann es sich beispielsweise um einen piezo-elektrischen Effekt oder einen Formgedächtniseffekt handeln. Ferner kann das Element 116 auch als Bimetallstreifen ausgebildet sein.

Je nach der Ausführungsform des Elements 116 kann die Auslösung des Formänderungseffekts so erfolgen, dass an das Element 116 eine Spannung angelegt wird, die aufgrund des piezo-elektrischen Effekts zu einer Längenänderung des Elements 116 führt, welche wiederum das Öffnen oder Schließen des Schaltelements 114 bewirkt. Ferner kann das Element 116 mit einem elektrischen Strom beaufschlagt werden, so dass sich das Element 116 erwärmt. Durch die Erwärmung kann beispielsweise eine Formgedächtnislegierung von ihrer Tieftemperatur- in ihre Hochtemperaturform übergehen.

Je nach Ausführungsform des Elements 116 kann der Formänderungseffekt auch durch eine elektrische Spannung, einen elektrischen Strom, eine Temperaturänderung, eine Druckänderung, Strahlung, ein elektrisches Feld, ein magnetisches Feld und / oder ein elektromagnetisches Feld auslösbar sein.

Das Element 116 kann auch aus einer Substanz bestehen, die durch eine induzierbaren Phasenumwandlung zwischen einer leitfähigen und einer nicht-leitfähigen Phase überführt werden kann.

Die Schaltvorrichtung 108 ist mit einer Antenne 136 gekoppelt. Die Antenne 136 ist zum Empfang eines Signals auf einer Frequenz F2 ausgebildet.

Die Frequenz F1 der Antenne 104 und die Frequenz F2 der Antenne 136 sind voneinander beabstandet. Insbesondere liegen die Frequenzen F1 und F2 in einander nicht überlappenden Empfangsfrequenzbereichen. Vorzugsweise sind die Frequenzen F1 und F2 deutlich voneinander verschieden. Als Frequenzbereiche kommen insbesondere der Lang- und Längstwellenbereich, der Kurzwellenbereich, der Radiowellenbereich und der Mikrowellenbereich in Frage. Beispielsweise liegt der Empfangsfrequenzbereich F1 in MHz-Bereich, wohingegen der Empfangsfrequenzbereich F2 im Bereich von einigen KHz liegen kann.

Wenn die Antenne 136 ein Signal auf der Frequenz F2 empfängt, so induziert der Empfang dieses Signals eine Änderung des Schaltzustands der Schaltvorrichtung 108. Beispielsweise ist das Schaltelement 114 der Schaltvorrichtung 108 normalerweise geöffnet, wodurch ein erster Schaltzustand der Schaltvorrichtung 108 gegeben ist. Aufgrund des Empfangs des Signals durch die Antenne 136 wird die Schaltvorrichtung 108 in ihren zweiten Schaltzustand umgeschaltet, in dem das Schaltelement 114 geschlossen ist, um so das elektronische Gerät 102 zu aktivieren und einen Zugriff auf den Speicher 106 über die Antenne 104 zu ermöglichen.

Je nach der Ausführungsform des Elements 116 ist zur Änderung des Schaltzustands der Schaltvorrichtung 108 eine Umwandlung der von der Antenne 136 in Form des Signals empfangenen elektrischen Energie in eine andere physikalische Größe, wie zum Beispiel eine elektrische Spannung, einen elektrischen Strom, eine Temperaturänderung, eine Druckänderung, Strahlung, ein elektrisches Feld, ein magnetisches Feld und / oder ein elektromagnetisches Feld, welche lokal nur am Schaltelement oder global für das ganze Dokument erfolgen können, erforderlich.

Je nach Ausführungsform der Schaltvorrichtung 108 und des Elements 116 kann es ferner erforderlich sein, dass das Signal ständig von der Antenne 136 empfangen werden muss, um die Schaltvorrichtung in einem der beiden Schaltzustände, beispielsweise in dem zweiten Schaltzustand zu halten. Dies ist beispielsweise der Fall, wenn es sich bei dem Element 116 um einen Piezo-Kristall handelt, an dem ständig eine Spannung angelegt sein muss, um das Schaltelement 114 in seiner geschlossenen Position zu halten. Bei einer solchen Ausführungsform geht die Schaltvorrichtung 108 von ihrem zweiten Schaltzustand wieder in den ersten Schaltzustand über, wenn das Signal unterbrochen und nicht mehr von der Antenne 136 empfangen wird.

Wenn es sich bei der Schaltvorrichtung 108 hingegen beispielsweise um eine bistabile Kippstufe, das heißt einen sogenannten Flip-Flop, handelt, genügt ein Impuls des Signals, welcher von der Antenne 136 empfangen wird, um die Schaltvorrichtung 108 in den jeweils anderen Schaltzustand zu überführen und dort zu halten.

Durch das elektronische Gerät 102 mit seinem Speicher 106 und die Antenne 104 wird beispielsweise ein so genanntes Funketikett oder RFID-Tag gebildet. Im Gegensatz zu üblichen Funketiketten ist es erfindungsgemäß erforderlich, dass zum Lesen des Funketiketts auf einer ersten Frequenz zunächst eine Aktivierung des Funketiketts erfolgt, indem auf einem anderen Frequenzbereich, d.h. der zweiten Frequenz, ein Aktivierungssignal empfangen wird, welches zu einer Änderung des Schaltzustands der Schaltvorrichtung 108 führt.

Die Figur 1 zeigt auch ein Blockdiagramm einer Vorrichtung 118 zum Zugriff auf den Speicher 106 des Dokuments 100.

Die Vorrichtung 118 hat eine Schnittstelle 120, eine Komponente 122 zur Aktivierung und / oder Deaktivierung des Geräts 102, zumindest einen Mikroprozessor 124 zur Ausführung von Programminstruktionen 126 eines Anwendungsprogramms sowie eine Nutzer-Schnittstelle 128, die beispielsweise als graphische Nutzer-Schnittstelle ausgebildet ist.

Die Schnittstelle 120 beinhaltet eine Antenne, die zum Senden und Empfangen in dem Frequenzbereich F1 der Antenne 104 ausgebildet ist. Die Komponente 122 beinhaltet eine Antenne, die zur Sendung des Signals in dem Frequenzbereich F2 der Antenne 136 des Dokuments 100 ausgebildet ist.

Zur Aktivierung oder Deaktivierung des elektronischen Geräts 102 steuert also der Mikroprozessor 124 hierzu die Komponente 122 an, so dass diese in dem Frequenzbereich F2 zumindest einen elektromagnetischen Impuls abgibt, der von der Antenne 136 empfangen wird. Beispielsweise ist die Antenne 136 mit der Basis eines Transistors oder mit einem Eingang einer bistabilen Kippschaltung verbunden, so dass aufgrund des von der Antenne 136 empfangenen Impulses, die Unterbrechung der Leiterbahn 112 überbrückt wird oder geöffnet wird.

Nach der Aktivierung des elektronischen Geräts 102 kann der Mikroprozessor 124 über die Schnittstelle 120 und die Antenne 104 auf das elektronische Gerät 102 zugreifen.

Je nach Ausführungsform ist es während der gesamten Dauer des Zugriffs erforderlich, dass die Komponente 122 eine elektromagnetische Welle im Frequenzbereich F2 aussendet, damit die Unterbrechung der Leiterbahn 112 durch die Schaltvorrichtung 104 überbrückt bleibt.

Alternativ ist es auch möglich, dass die Komponente nur zur Aktivierung, das heißt zur Überbrückung der Unterbrechung der Leiterbahn 112, bzw. zur nachfolgenden Deaktivierung einen elektromagnetischen Impuls im Frequenzbereich F2 abgibt. Dies ist insbesondere dann der Fall, wenn die Schaltvorrichtung 108 eine bistabile Kippschaltung beinhaltet, die durch Empfang eines elektromagnetischen Impulses durch die Antenne 136 zwischen ihren beiden Schaltzuständen hin und her wechselt.

Zum Auslesen des Speichers 106 des Dokuments 100 startet ein Nutzer über die Nutzer-Schnittstelle 128 die Anwendung, so dass die Programminstruktionen 126 von dem Mikroprozessor 124 ausgeführt werden. Der Mikroprozessor 124 steuert daraufhin die Komponente 122 an, so dass diese das Signal auf der Frequenz F2 absendet, welches von der Antenne 136 empfangen wird.

Der Empfang des Signals von der Antenne 136 führt dazu, dass sich der Schaltzustand der Schaltvorrichtung 108 ändert, also beispielsweise das Schaltelement 114 geschlossen wird, um das Gerät 102 zu aktivieren. Daraufhin steuert der Mikroprozessor 124 die Schnittstelle 120 an, um drahtlos über die Antenne 104 in dem Frequenzbereich F1 auf den Speicher 106 lesend und / oder schreibend zuzugreifen. Die aus dem Speicher 106 auf diese Art und Weise ausgelesenen Daten werden auf der Nutzer-Schnittstelle 128 angezeigt.

Diese Ausführungsform ist besonders zur Realisierung elektronischer Visa vorteilhaft, insbesondere, wenn in einem elektronischen Reisepass mehrere solcher Visa vorhanden sind. Die verschiedenen Visa und auch der Reisepass haben vorzugsweise eine zusätzliche Antenne 136, wobei die verschiedenen Antennen 136 nicht überlappende Frequenzbereiche F2 haben. Die einzelnen Empfangsfrequenzbereiche F2 des elektronischen Reisepasses bzw. der einzelnen Visa können beispielsweise um jeweils mehrere KHz voneinander beabstandet sein.

Durch Wahl eines Frequenzbereichs F2 für die Aussendung einer elektromagnetischen Welle durch die Komponente 122 ist so der elektronische Reisepass bzw. ein bestimmtes Visum des elektronischen Reisepasses gezielt aktivierbar oder deaktivierbar.

Beispielsweise hat der elektronische Reisepass selbst eine global festgelegte und dem Lesegerät bekannte Empfangsfrequenz F2. In dem Speicher 106 des elektronischen Geräts 102 des Reisepass kann eine Tabelle abgelegt sein, die die zweiten Empfangsfrequenzbereiche der in dem elektronischen Reisepass befindlichen Visa beinhaltet. Diese Tabelle wird von dem Lesegerät 118 zunächst ausgelesen, bevor mit Hilfe dieser Tabelle zielgerichtet auf ein bestimmtes Visum zugegriffen wird.

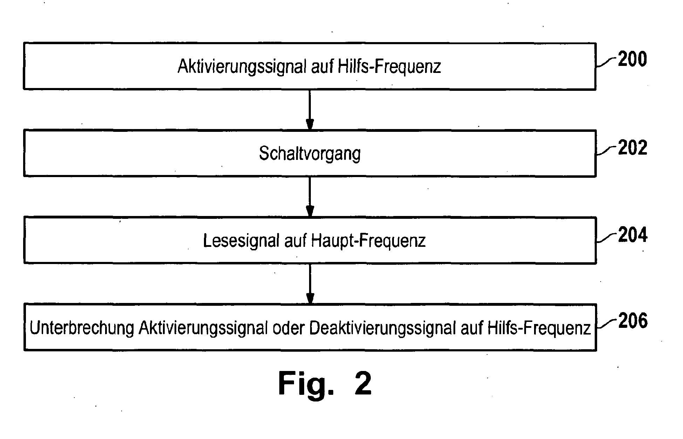

Die Figur 2 zeigt ein Flussdiagramm einer Ausführungsform eines Verfahrens zum Auslesen des Funketiketts des Dokuments 100 der Figur 1. In dem Schritt 200 wird durch das Lesegerät 118 ein Aktivierungssignal auf der Hilfs-Frequenz F2 der Antenne 136 abgesendet. Durch den Empfang des Aktivierungssignals wird ein Schaltvorgang der Schaltvorrichtung 108 ausgelöst, so dass das elektronische Gerät 102 aktiviert wird, indem es beispielsweise mit der Antenne 104 verbunden wird.

Daraufhin wird von dem Lesegerät 118 ein Lesesignal auf der Haupt-Frequenz F1 abgesendet, um den Inhalt des Speichers 106 auszulesen.

Je nach Ausführungsform der Schaltvorrichtung 108 handelt es sich bei dem Aktivierungssignal um einen Impuls oder um ein kontinuierliches Signal, um das Schaltelement 114 während des Lesesignals geschlossen zu halten. Nach Beendigung des Lesevorgangs wird - je nach Ausführungsform der Schaltvorrichtung 108 - ein weiterer Impuls abgesendet oder es wird das kontinuierliche Signal unterbrochen, um das Schaltelement 114 wieder zu öffnen und damit das elektronische Gerät 102 zu deaktivieren, indem es beispielsweise von der Antenne 104 getrennt wird.

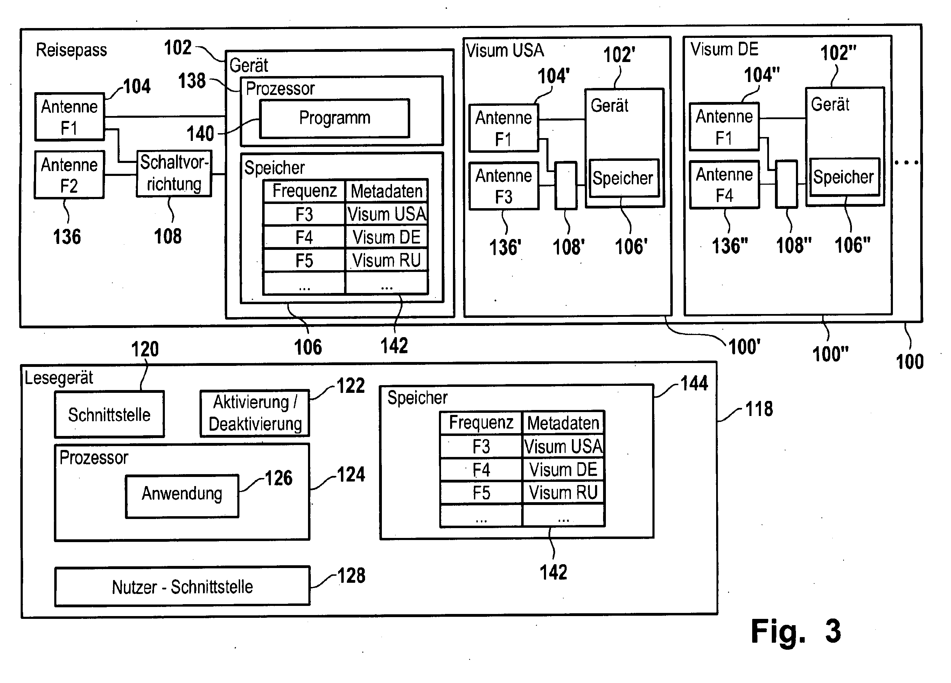

Die Figur 3 zeigt eine Ausführungsform des Dokuments 100 als Haupt-Dokument, welches mehrere Teil-Dokumente 100', 100", ... beinhaltet. Das Haupt-Dokument 100 und die Teil-Dokumente 100', 100", ... sind prinzipiell jeweils so wie das Dokument 100 in der Ausführungsform der Figur 1 aufgebaut. Alternativ kann auch das Haupt-Dokument 100 in einer Ausführungsform nach dem Stand der Technik ohne Schaltelement, zum Beispiel entsprechend den ICAO Vorschriften für Reisedokumenten, ausgeführt sein und nur die Teildokumente 100', 100", ... sind erfindungsgemäß ausgebildet. Das Dokument kann auch weitere Teildokumente enthalten, welche nicht erfindungsgemäß, sondern nach dem Stand der Technik ausgeführt sind.

Beispielsweise handelt es sich bei dem Haupt-Dokument um einen elektronischen Reisepass. In den elektronischen Reisepass 100 sind verschiedene Visa als Teil-Dokumente 100', 100", ... eingeklebt, wobei es sich bei dem Teil-Dokument 100' beispielsweise um ein Visum für die Einreise in Land A und bei dem Teil-Dokument 100" um ein Visum für die Einreise in Land B handelt usw.

In der hier betrachteten Ausführungsform hat das elektronische Gerät 102 des Haupt-Dokuments 100 einen Mikroprozessor 138 zur Ausführung von Programminstruktionen 140. In dem Speicher 106 des elektronischen Geräts 102 ist ein Index 142 auf die zu dem Haupt-Dokument 100 gehörenden Teil-Dokumente 100', 100", ... abgespeichert. Dieser Index 142 gibt die Hilfs-Frequenzen F3, F4, ... der Teil-Dokumente 100', 100", ... an, sowie den Hilfs-Frequenzen zugeordnete Metadaten, die die Teil-Dokumente 100', 100", ... jeweils beschreiben.

Alternativ kann der Index mit den Hilfs-Frequenzen auch allgemein bekannt oder im Lesegerät abgespeichert sein. Dieses ist die bevorzugte Ausführungsform, wenn es sich bei dem Hauptdokument 100 um ein Reisedokument und bei den Teildokumenten 100', 100", ... um Visa handelt. Hierbei können die Hilfs-Frequenzen den Ländern spezifisch und permanent zugeordnet sein, so dass ein Lesegerät nur über die für die Einreise in das spezifische Land zu verwendende Frequenz verfügen muss.

Beispielsweise ist die Antenne 136' des Teil-Dokuments 100' zum Empfang auf der Hilfs-Frequenz F3 ausgebildet, wohingegen die Antenne 136" zum Empfang auf der Hilfsfrequenz F4 ausgebildet ist. Dementsprechend hat der Index 142 einen Eintrag für die Hilfs-Frequenz F3, der als Metadatum "Visum Land A" zugeordnet ist, und einen Eintrag für die Hilfs-Frequenz F4, der als Metadatum "Visum Land B" zugeordnet ist. Der Index 142 kann weitere Indexeintragungen beinhalten, und zwar entsprechend der Anzahl der Teil-Dokumente, die das Haupt-Dokument 100 trägt, also beispielsweise einen Eintrag für eine weitere Hilfs-Frequenz F5 mit dem Metadatum "Visum Land C", etc.

Zum Lesen der Daten eines der Teil-Dokumente wird wie folgt vorgegangen:

Ein Nutzer startet über die Nutzer-Schnittstelle 128 die Anwendung des Lesegeräts 118, so dass die Programminstruktionen 126 ausgeführt werden. In den Programminstruktionen 126 ist die Hilfs-Frequenz F2 des Haupt-Dokuments 100 vorgegeben -sofern das Hauptdokument im Sinne der Erfindung gestaltet ist, ansonsten erfolgt dies ohne Verwendung der Hilfs-Frequenz F2. Dementsprechend steuert der Mikroprozessor 124 die Komponente 122 an, so dass diese ein Signal auf der Hilfs-Frequenz F2 abgibt. Aufgrund des Empfangs des Signals durch die Antenne 136 des Haupt-Dokuments 100 ändert sich der Schaltzustand der Schaltvorrichtung 108, so dass das Gerät 102 mit der Antenne 104 verbunden wird. Dann steuert der Mikroprozessor 124 die Schnittstelle 120 zum Auslesen des Index 142 aus dem Speicher 106 über die Antenne 104 an, es sei denn, dieser Index ist bekannt, bzw. im Lesegerät eingespeichert, was zum Beispiel im Falle von Visa bevorzugt ist. Der von dem Lesegerät 118 empfangene Index 142 wird in dem Speicher 144 der Vorrichtung 118 abgelegt.

Der Index 142 kann über die Nutzer-Schnittstelle 128 ausgegeben werden, so dass der Benutzer anhand der Metadaten eines der Teil-Dokumente auswählen kann. Durch Nicht-Übertragung der Hilfs-Frequenzen kann so auch gezielt der Zugriff auf Teil-Dokumente verweigert werden. Dies kann beispielsweise mittels eines Doppelklicks mit der Computermaus auf den gewünschten Index-Eintrag erfolgen. Selektiert der Benutzer beispielsweise den Index-Eintrag für "Visum Land B", so steuert der Mikroprozessor 124 die Komponente 122 an, so dass diese ein Signal auf der Hilfs-Frequenz F4 abgibt.

Daraufhin wird der Schaltzustand der Schaltvorrichtung 108" des Teil-Dokuments 100", das heißt des Visums für die Einreise nach Land B, geändert, so dass das Gerät 102" mit der Antenne 104" verbunden wird. Danach steuert der Mikroprozessor 124 die Schnittstelle 120 an, so dass diese auf der Frequenz F1 den Speicher 106" des Geräts 102" ausliest. Die aus dem Speicher 106" ausgelesenen Daten werden auf der Nutzer-Schnittstelle 128 angezeigt, um das Teil-Dokument, zum Beispiel ein Visum, zu prüfen.

Die Hilfs-Frequenzen F2, F3, F4, ... können im Prinzip beliebig gewählt sein, solange sie sich untereinander und hinreichend zu der Haupt-Frequenz F1 unterscheiden. Die Hilfsfrequenzen können auch durch eine Konvention oder Standardisierung z.B. durch ein vorgegebenes Frequenzverteilungsmuster definiert sein. Beispielsweise ist festgelegt, dass sämtliche Hilfs-Frequenzen ausgehend von der Hilfs-Frequenz F2 einen vorgegebenen Frequenz-Abstand aufweisen. Alternativ kann jedem Staat eine bestimmte Hilfs-Frequenz zugeordnet sein. In diesem Fall kann wie oben beschrieben auf den Index 142 in dem Gerät 102 verzichtet werden, da die in Frage kommenden Hilfs-Frequenzen in dem Lesegerät 118 als a priori Information bereits vorliegt.

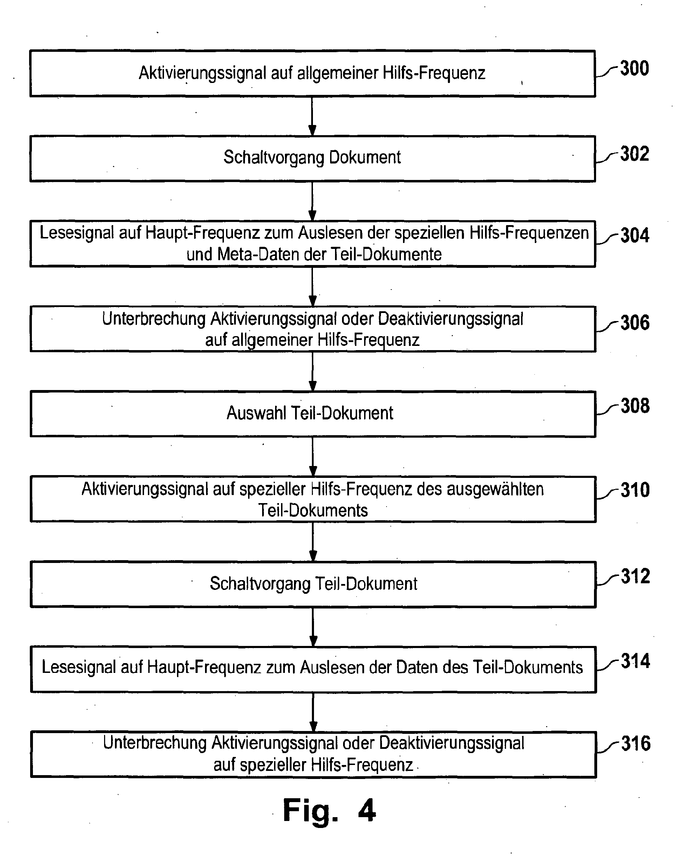

Die Figur 4 zeigt ein Flussdiagramm einer entsprechenden Ausführungsform eines erfindungsgemäßen Verfahrens zum Lesen eines Haupt-Dokuments bzw. eines der Teil-Dokumente des Haupt-Dokuments. In dem Schritt 300 wird von dem Lesegerät ein Aktivierungssignal auf einer durch Konvention festgelegten allgemeinen Hilfs-Frequenz, also der Frequenz F2, abgesendet, um das Haupt-Dokument zu aktivieren. Dadurch wird in dem Schritt 302 ein Schaltvorgang ausgelöst, der ein nachfolgendes Auslesen des Hauptdokuments auf der Haupt-Frequenz, das heißt der durch Konvention festgelegten Frequenz F1, ermöglicht (Schritt 304). In dem Schritt 304 wird beispielsweise der Index 142 (vgl. Figur 3) mit den speziellen Hilfs-Frequenzen der Teil-Dokumente und den jeweils zugeordneten Metadaten ausgelesen. In dem Schritt 306 wird je nach Ausführungsform das Aktivierungssignal unterbrochen oder es wird ein Deaktivierungssignal auf der allgemeinen Hilfs-Frequenz gesendet, um das Haupt-Dokument wieder zu deaktivieren.

In dem Schritt 308 erfolgt anhand des Index die Auswahl eines der Teil-Dokumente. In dem Schritt 310 wird das ausgewählte Teil-Dokument aktiviert, indem auf der speziellen Hilfs-Frequenz F2, die dem ausgewählten Teil-Dokument in dem Index 142 zugeordnet ist, ein Signal ausgesendet wird. Dies führt in dem Schritt 312 zu einem Schaltvorgang der Schaltvorrichtung des ausgewählten Teil-Dokuments, so dass ein Auslesen des Teil-Dokuments in dem Schritt 314 ermöglicht ist.

Hierzu wird auf der Haupt-Frequenz ein Lesesignal abgesendet, um die Daten aus dem Datenspeicher des ausgewählten Teil-Dokuments auszulesen (Schritt 314). Je nach Ausführungsform wird das ausgewählte Teil-Dokument in dem Schritt 316 durch Unterbrechung des Aktivierungssignals oder durch ein Deaktivierungssignal auf der speziellen, dem ausgewählten Teil-Dokument zugeordneten Hilfsfrequenz wieder deselektiert.

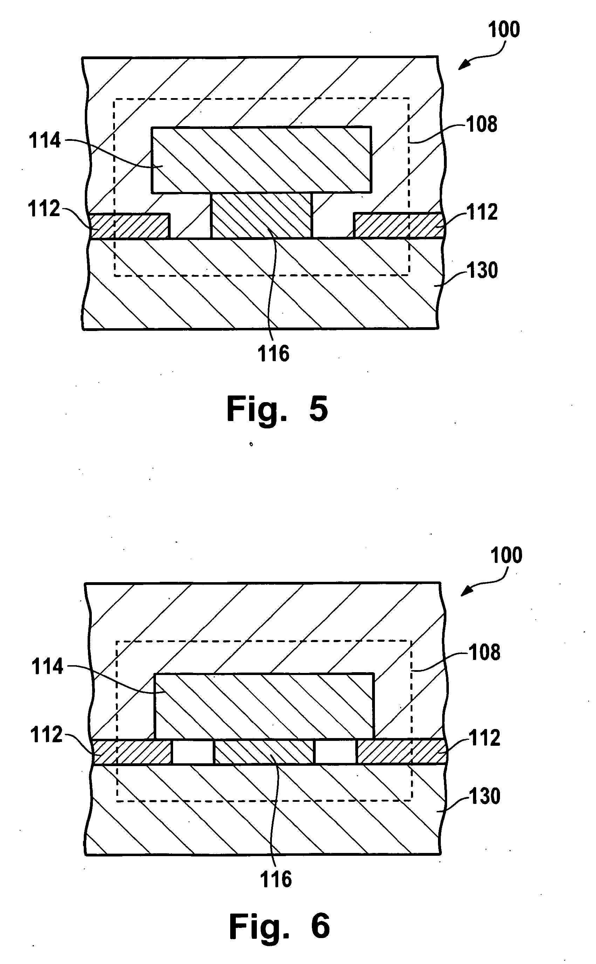

Die Figur 5 zeigt einen Teilschnitt des Dokuments 100 mit einer Detailansicht einer Ausführungsform der Schaltvorrichtung 108.

Das Dokument 100 hat in der Ausführungsform der Figur 5 einen Träger 130, auf dem sich die Leiterbahn 112 befindet. Die Leiterbahn 112 ist unterbrochen, wobei die Unterbrechung durch das Schaltelement 114 überbrückbar ist. Auf dem Träger 130 befindet sich im Bereich der Unterbrechung der Leiterbahn 112 unterhalb des Schaltelements 114 das Element 116. Dieses Element 116 ist in der Lage, seine Größe und / oder Form zu ändern. Beispielsweise handelt es sich bei dem Element 116 um einen Piezo-Kristall, ein Formgedächtniselement, ein Element, das einen anderen Formänderungseffekt oder einen Transistor, bevorzugt aus einem organischem Material, aufweist.

Die Figur 6 zeigt die Schaltvorrichtung 108 nach Auslösung des Formänderungseffekts. Aufgrund des Formänderungseffekts hat das Element 116 seine Form so geändert, dass das Schaltelement 114 abgesenkt worden ist, so dass es mit den Leiterbahnen 112 kontaktiert. Dadurch wird das elektronische Gerät 102 aktiviert, indem es beispielsweise mit seiner Antenne 104 verbunden wird.

Die Schaltvorrichtung 108 kann als separate Komponente oder als integraler Bestandteil des elektronischen Geräts 102 oder der Antenne 104 ausgebildet sein.

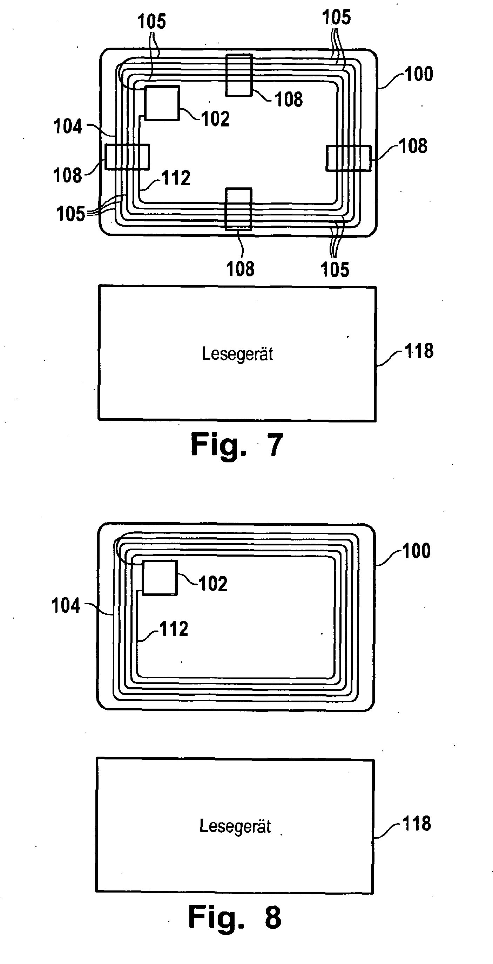

Die Figur 7 zeigt eine Ausführungsform des Dokuments 100, bei der die Leiterbahn 112 der Antenne mehrfach durch Schaltvorrichtungen 108 unterbrochen ist, woraus eine Vielzahl von Antennensegmenten 105 resultiert.

Zur Aktivierung des elektronischen Geräts 102 werden die Schaltvorrichtungen 108 von dem Lesegerät 118 angesprochen, um die entsprechenden Kontakte zu schließen und so die Antennensegmente 105 miteinander zu verbinden. Dadurch wird die Antenne 104 funktionsfähig und das elektronische Gerät 102 ist damit von dem Lesegerät 118 ansteuerbar. Nach einem von dem Lesegerät 118 durchgeführten Lesezugriff, werden die Schaltvorrichtungen 108 erneut von dem Lesegerät 118 angesprochen, um die Kontakte wieder zu öffnen und so die Antennensegmente 105 elektrisch voneinander zu trennen.

Dies hat den Vorteil, dass die Antenne 104 nur dann realisiert ist, wenn ein Zugriff auf das elektronische Gerät 102 erfolgen soll. Hierdurch können elektromagnetische Interferenzen und Beeinflussungen der Antenne 104 durch unmittelbar benachbart angeordneten Antennen weiterer Dokumente oder Teil-Dokumente reduziert werden.

Dies ist insbesondere vorteilhaft zur Realisierung eines elektronischen Visums. Ein solches elektronisches Visum wird in einen elektronischen Reisepass integriert, indem es dort beispielsweise eingeklebt wird. Der elektronische Reisepass selbst kann einen Transponder mit einer Antenne aufweisen sowie auch weitere elektronische Visa mit entsprechenden Antennen und Transpondern (vgl. die Ausführungsform der Fig. 3).

Hierbei tritt das Problem auf, dass die einzelnen Antennen in unmittelbarer Nachbarschaft, beispielsweise bei geschlossenem Reisepass übereinander angeordnet sind, so dass es zu entsprechend starken Wechselwirkungen zwischen den einzelnen Antennen kommen kann. Diese Wechselwirkungen können einen Zugriff auf die einzelnen Visa bzw. den elektronischen Reisepass erschweren. Dieses Problem wird auch dadurch gelöst, dass die Antennen des elektronischen Reisepasses bzw. der elektronischen Visa nur dann durch Verschalten der einzelnen Antennensegmente gebildet werden, wie anhand der Figur 7 erläutert, wenn ein entsprechender Zugriff erfolgen soll.

Die Figur 8 zeigt eine Ausführungsform des Dokuments 100, die der Ausführungsform der Figur 7 entspricht, wobei die Leiterbahn 112 durch eine Substanz gebildet wird, die durch Induktion einer Phasenumwandlung von einem nicht-leitfähigen Zustand in einen leitfähigen Zustand überführt werden kann. Eine hierfür geeignete Substanz ist beispielsweise lod oder Phosphor.

Wenn durch das Lesegerät 118 auf das elektronische Gerät 102 bzw. die darin gespeicherten Daten zugegriffen werden soll, induziert das Lesegerät 118 zunächst eine geeignete Phasenumwandlung, um die Leiterbahnen 112 in deren leitfähigen Zustand zu überführen. Falls die leitfähige Phase thermodynamisch instabil ist, erfolgt nach einem gewissen Zeitraum automatisch eine Rücktransformation in die nicht leitende Phase.

### Bezugszeichenliste

- 100: Dokument, Haupt-Dokument
- 100': Teil-Dokument
- 100": Teil-Dokument
- 102: elektronisches Gerät
- 102': elektronisches Gerät
- 102": elektronisches Gerät
- 104: Antenne
- 104': Antenne
- 104": Antenne
- 106: Speicher
- 106': Speicher
- 106": Speicher
- 108: Schaltvorrichtung
- 108': Schaltvorrichtung
- 108": Schaltvorrichtung
- 110: Leiterbahn
- 112: Leiterbahn
- 114: Schaltelement
- 116: Element
- 118: Vorrichtung, Lesegerät
- 120: Schnittstelle
- 122: Komponente
- 124: Mikroprozessor
- 126: Programminstruktion
- 128: Nutzer-Schnittstelle
- 130: Träger
- 132: Oberfläche
- 138: Mikroprozessor
- 140: Programminstruktionen
- 142: Index
- 144: Speicher

## Patentansprüche

1. Dokument (100) mit:
- einem elektronischen Gerät (102), welches einen elektronischen Datenspeicher (106) beinhaltet,
- einer ersten Antenne (104) zur Datenübertragung auf einer ersten Frequenz (F1),
- einer Schaltvorrichtung (108), die ein Schaltelement (114) aufweist, wobei in einem ersten geöffneten Schaltzustand der Schaltvorrichtung die Datenübertragung nicht möglich ist und in einem zweiten geschlossen Schaltzustand der Schaltvorrichtung die Datenübertragung möglich ist,
- einer zweiten Antenne (136) zum Empfang eines Signals auf einer zweiten Frequenz zur Änderung des Schaltzustands der Schaltvorrichtung,
wobei die ersten und zweiten Antennen so ausgebildet sind, dass die ersten und zweiten Frequenzen voneinander beabstandet sind,
**dadurch gekennzeichnet, dass** das elektronische Gerät über Leiterbahnen (110, 112) mit der ersten Antenne verbunden ist, wobei eine der Leiterbahnen durch das Schaltelement in dem ersten geöffneten Schaltzustand unterbrochen Ist, so dass das elektronische Gerät deaktiviert ist, da es von der ersten Antenne (104) getrennt ist und ein Zugriff auf den Datenspeicher (106) nicht möglich ist, und wobei das elektronische Gerät in dem zweiten geschlossenen Schaltzustand mit der ersten Antenne verbunden ist, so dass das elektronische Gerät aktiviert ist.

2. Dokument nach Anspruch 1, wobei die erste Frequenz oberhalb 1 MHz, vorzugsweise oberhalb 2 MHz, liegt, und die zweite Frequenz unterhalb 1 MHz, vorzugsweise unterhalb 500 KHz, liegt.

3. Dokument nach Anspruch 1 oder 2, wobei die Schaltvorrichtung eine bistabile Kippschaltung beinhaltet.

4. Dokument nach einem der vorhergehenden Ansprüche, wobei die Schaltvorrichtung durch Auslösung eines Formänderungseffekts schaltbar ist.

5. Dokument nach Anspruch 4, wobei der Formänderungseffekt unmittelbar oder mittelbar durch den Empfang des Signals auslösbar ist.

6. Dokument nach einem der vorhergehenden Ansprüche, wobei die Schaltvorrichtung zwischen der ersten Antenne und dem Datenspeicher angeordnet ist.

7. Dokument nach einem der vorhergehenden Ansprüche, mit einem den Datenspeicher beinhaltenden elektronischen Gerät (102).

8. Dokument nach Anspruch 7, wobei es sich bei dem elektronischen Gerät um einen Transponder handelt.

9. Dokument nach einem der vorhergehenden Ansprüche, wobei die Änderung des Schaltzustands reversibel ist.

10. Dokument nach einem der vorhergehenden Ansprüche, mit einem oder mehreren Teil-Dokumenten (100', 100",...), wobei jedes der Teil-Dokumente nach einem der vorhergehenden Ansprüche ausgebildet ist, und wobei die zweiten Frequenzen (F3, F4, F5,...) der Teil-Dokumente voneinander und von der zweiten Frequenz (F2) des Dokuments beabstandet sind, und die ersten Frequenzen (F1) des Dokuments und der Teil-Dokumente im wesentlichen gleich sind.

11. Dokument nach Anspruch 10, wobei die zweiten Frequenzen der Teil-Dokumente nach einem vorgegebenen Muster voneinander beabstandet sind.

12. Dokument nach Anspruch 10 oder 11, wobei eine Angabe (142) der zweiten Frequenzen der Teil-Dokumente in dem Datenspeicher (106) des Dokuments gespeichert ist.

13. Dokument nach Anspruch 12, wobei in dem Datenspeicher (106) den zweiten Frequenzen zugeordnete Metadaten gespeichert sind.

14. Dokument nach einem der vorhergehenden Ansprüche 10 bis 13, wobei es sich um einen Reisepass handelt, und wobei es sich bei dem zumindest einem Teil-Dokument um ein Visum des Reisepass handelt.

15. System mit zumindest einem Funketikett und mit einer Vorrichtung zum Zugriff auf das zumindest eine Funketikett,
wobei das zumindest eine Funketikett beinhaltet:
- ein elektronisches Gerät (102), wobei das elektronische Gerät einen elektronischen Datenspeicher (106) beinhaltet,
- eine erste Antenne (104) zur Datenübertragung auf einer ersten Frequenz (F1),
- eine Schaltvorrichtung (108), die ein Schaltelement (114) aufweist, wobei in einem ersten geöffneten Schaltzustand der Schaltvorrichtung die Datenübertragung nicht möglich ist und in einem zweiten geschlossen Schaltzustand der Schaltvorrichtung die Datenübertragung möglich ist,
- eine zweite Antenne (136) zum Empfang eines Signals auf einer zweiten Frequenz zur Änderung des Schaltzustands der Schaltvorrichtung,
wobei die ersten und zweiten Antennen so ausgebildet sind, dass die ersten und zweiten Frequenzen voneinander beabstandet sind,
wobei das elektronische Gerät über Leiterbahnen (110, 112) mit der ersten Antenne verbunden ist,
wobei eine der Leiterbahnen durch das Schaltelement in dem ersten geöffneten Schaltzustand unterbrochen ist, so dass das elektronische Gerät deaktiviert ist, da es von der ersten Antenne (104) getrennt ist und ein Zugriff auf den Datenspeicher (106) nicht möglich ist, und wobei das elektronische Gerät in dem zweiten geschlossenen Schaltzustand mit der ersten Antenne verbunden ist, so dass das elektronische Gerät aktiviert ist,
wobei die Vorrichtung aufweist:
- eine erste Antenne (120) zum Lesen des zumindest einen Funketiketts auf einer ersten Frequenz (F1),
- eine zweite Antenne (122) zum Senden eines Signals auf einer zweiten Frequenz (F2, F3, F4, F5,...) zur Auswahl des zumindest einen Funketiketts aus einer Menge von Funketiketten (102', 102",...), wobei jedes Funketikett der Menge von Funketiketten eine zugeordnete zweite Frequenz hat, wobei die zweiten Frequenzen (F2, F3, F4, F5,...) der Funketikette voneinander und von der ersten Frequenz beabstandet sind.

16. System nach Anspruch 15, wobei die zweite Antenne der Vorrichtung zum Senden des Signals auf einer, mehreren oder allen zweiten Frequenzen (F2, F3, F4, F5,...) ausgebildet ist.

17. System nach Anspruch 15 oder 16, wobei die erste Antenne der Vorrichtung als Chipkarten-Schnittstelle ausgebildet ist.

18. Verfahren zum Zugriff auf ein Funketikett auf einer ersten Frequenz (F1), wobei dem Funketikett eine zweite Frequenz (F2, F3, F4, F5,...) zugeordnet Ist, wobei das Funketikett beinhaltet:
- ein elektronisches Gerät (102), welches einen elektronischen Datenspeicher (106) beinhaltet,
- eine ersten Antenne (104) zur Datenübertragung auf einer ersten Frequenz (F1),
- eine Schaltvorrichtung (108), die ein Schaltelement (114) aufweist, wobei in einem ersten geöffneten Schaltzustand der Schaltvorrichtung eine Datenübertragung über die erste Frequenz nicht möglich ist,
- eine zweiten Antenne (136) zum Empfang eines Signals auf einer zweiten Frequenz zur Änderung des Schaltzustands der Schaltvorrichtung,
wobei die ersten und zweiten Antennen so ausgebildet sind, dass die ersten und zweiten Frequenzen voneinander beabstandet sind,
wobei das elektronische Gerät über Leiterbahnen (110, 112) mit der ersten Antenne verbunden ist, wobei eine der Leiterbahnen durch das Schaltelement
in dem ersten geöffneten Schaltzustand unterbrochen ist, so dass das elektronische Gerät deaktiviert Ist, da es von der ersten Antenne (104) getrennt ist und ein Zugriff auf den Datenspeicher (106) nicht möglich ist,
mit folgenden Schritten:
- Auswahl des Funketiketts durch Senden eines Signals auf der zweiten Frequenz,
- Änderung des Schaltzustands der Schaltvorrichtung nach Empfang des gesendeten Signals, wodurch die Schaltvorrichtung einen zweiten geschlossen Schaltzustand der Schaltvorrichtung einnimmt, wobei das elektronische Gerät in dem zweiten geschlossenen Schaltzustand mit der ersten Antenne verbunden ist, so dass das elektronische Gerät aktiviert ist, und wobei die Datenübertragung in dem zweiten Schaltzustand möglich ist,
- Lesen des Funketiketts auf der ersten Frequenz.

19. Computerprogrammprodukt mit von einem Prozessor ausführbaren Instruktionen zur Durchführung eines Verfahrens nach Anspruch 18.

## Claims

1. Document (100), having:
- an electronic device (102) containing an electronic data storage means (106),
- a first antenna (104) for data transmission on a first frequency (F1),
- a switching apparatus (108) having a switching element (114), wherein data transmission is not possible in a first open switching state of the switching apparatus and data transmission is possible in a second closed switching state of the switching apparatus,
- a second antenna (136) for receiving a signal on a second frequency for changing the switching state of the switching apparatus,
wherein the first and second antennas are configured such that the first and second frequencies are spaced apart from one another,
**characterized in that** the electronic device is connected to the first antenna via conductor tracks (110, 112), wherein one of the conductor tracks is interrupted by the switching element in the first open switching state such that the electronic device is deactivated since it is disconnected from the first antenna (104) and access to the data storage means (106) is not possible, and wherein the electronic device is connected to the first antenna in the second closed switching state such that the electronic device is activated.

2. Document according to Claim 1, wherein the first frequency is above 1 MHz, preferably above 2 MHz, and the second frequency is below 1 MHz, preferably below 500 KHz.

3. Document according to Claim 1 or 2, wherein the switching apparatus contains a bistable multivibrator.

4. Document according to one of the preceding claims, wherein the switching apparatus is switchable by triggering a form-change effect.

5. Document according to Claim 4, wherein the form-change effect is triggerable directly or indirectly by the receipt of the signal.

6. Document according to one of the preceding claims, wherein the switching apparatus is arranged between the first antenna and the data storage means.

7. Document according to one of the preceding claims, having an electronic device (102) containing the data storage means.

8. Document according to Claim 7, wherein the electronic device is a transponder.

9. Document according to one of the preceding claims, wherein the change in the switching state is reversible.

10. Document according to one of the preceding claims, having one or more partial documents (100', 100",...), wherein each of the partial documents is configured according to one of the preceding claims and wherein the second frequencies (F3, F4, F5,...) of the partial documents are spaced apart from one another and from the second frequency (F2) of the document, and the first frequencies (F1) of the document and of the partial documents are substantially the same.

11. Document according to Claim 10, wherein the second frequencies of the partial documents are spaced apart from one another according to a prespecified pattern.

12. Document according to Claim 10 or 11, wherein a statement (142) of the second frequencies of the partial documents is stored in the data storage means (106) of the document.

13. Document according to Claim 12, wherein metadata associated with the second frequencies are stored in the data storage means (106).

14. Document according to one of the preceding claims 10 to 13, wherein the document is a passport, and wherein the at least one partial document is a visa in the passport.

15. System having at least one radio tag and having an apparatus for accessing the at least one radio tag,
wherein the at least one radio tag contains the following:
- an electronic device (102), the electronic device containing an electronic data storage means (106),
- a first antenna (104) for data transmission on a first frequency (F1),
- a switching apparatus (108) having a switching element (114), wherein data transmission is not possible in a first open switching state of the switching apparatus and data transmission is possible in a second closed switching state of the switching apparatus,
- a second antenna (136) for receiving a signal on a second frequency for changing the switching state of the switching apparatus,
wherein the first and second antennas are configured such that the first and second frequencies are spaced apart from one another,
wherein the Electronic device is connected to the first antenna via conductor tracks (110, 112),
wherein one of the conductor tracks is interrupted by the switching element in the first open switching state such that the electronic device is deactivated since it is disconnected from the first antenna (104) and access to the data storage means (106) is not possible, and wherein the electronic device is connected to the first antenna in the second closed switching state such that the electronic device is activated,
wherein the apparatus has the following:
- a first antenna (120) for reading the at least one radio tag on a first frequency (F1),
- a second antenna (122) for transmitting a signal on a second frequency (F2, F3, F4, F5,...) for selecting the at least one radio tag from a set of radio tags (102', 102",...), wherein each radio tag of the set of radio tags has an associated second frequency, wherein the second frequencies (F2, F3, F4, F5,...) of the radio tags are spaced apart from one another and from the first frequency.

16. System according to Claim 15, wherein the second antenna of the apparatus is configured for transmitting the signal on one, a plurality of or all second frequencies (F2, F3, F4, F5,...).

17. System according to Claim 15 or 16, wherein the first antenna of the apparatus is configured as a smart card interface.

18. Method for accessing a radio tag on a first frequency (F2), wherein the radio tag is assigned a second frequency (F2, F3, F4, F5,...), wherein the radio tag contains the following:
- an electronic device (102) containing an electronic data storage means (106),
- a first antenna (104) for data transmission on a first frequency (F1),
- a switching apparatus (108) having a switching element (114), wherein data transmission at the first frequency is not possible in a first open switching state of the switching apparatus,
- a second antenna (136) for receiving a signal on a second frequency for changing the switching state of the switching apparatus,
wherein the first and second antennas are configured such that the first and second frequencies are spaced apart from one another,
wherein the electronic device is connected to the first antenna via conductor tracks (110, 112), wherein once of the conductor tracks is interrupted by the switching element in the first open switching state such that the electronic device is deactivated since it is disconnected from the first antenna (104) and access to the data storage means (106) is not possible,
having the following steps:
- selection of the radio tag by transmitting a signal on the second frequency,
- changing the switching state of the switching apparatus after receipt of the transmitted signal, as a result of which the switching apparatus assumes a second closed switching state of the switching apparatus, wherein the electronic device in the second closed switching state is connected to the first antenna such that the electronic device is activated, and wherein data transmission is possible in the second switching state,
- reading the radio tag on the first frequency.

19. Computer program product having instructions which are executable by a processor for carrying out a method according to Claim 18.

## Revendications

1. Document (100) comprenant :
- un appareil électronique (102) comportant une mémoire de données électronique (106),
- une première antenne (104) destinée à la transmettre des données à une première fréquence (F1),
- un dispositif de commutation (108) comprenant un élément de commutation (114), dans lequel, dans un premier état de commutation ouvert du dispositif de commutation, la transmission de données n'est pas possible et dans un second état de commutation fermé du dispositif de commutation, la transmission de données est possible,
- une seconde antenne (136) destinée à recevoir un signal à une seconde fréquence pour modifier l'état de commutation du dispositif de commutation,
dans lequel les première et seconde antennes sont conçues de telle manière que les première et seconde fréquences soient espacées l'une de l'autre,
**caractérisé en ce que** l'appareil électronique est connecté à la première antenne par l'intermédiaire de trajets conducteurs (110, 112), dans lequel l'un des trajets conducteurs est interrompu par l'élément de commutation dans le premier état de commutation ouvert de manière à ce que l'appareil électronique soit désactivé en raison du fait qu'il est séparé de la première antenne (104) et qu'un accès à la mémoire de données (106) n'est pas possible, et dans lequel l'appareil électronique est connecté à la première antenne dans le second état de commutation fermé de manière à ce que l'appareil électronique soit activé.

2. Document selon la revendication 1, dans lequel la première fréquence se situe au-dessus de 1 MHz et de préférence au-dessus de 2 MHz, et dans lequel la seconde fréquence se situe en dessous de 1 MHz et de préférence en dessous de 500 kHz.

3. Document selon la revendication 1 ou 2, dans lequel le dispositif de commutation comporte une bascule bistable.

4. Document selon l'une quelconque des revendications précédentes, dans lequel le dispositif de commutation peut être commuté pour déclencher un effet de modification de forme.

5. Document selon la revendication 4, dans lequel l'effet de modification de forme peut être déclenché directement ou par l'intermédiaire du signal de réception.

6. Document selon l'une quelconque des revendications précédentes, dans lequel le dispositif de commutation est disposé entre la première antenne et la mémoire de données.

7. Document selon l'une quelconque des revendications précédentes, comprenant un appareil électronique (102) comportant la mémoire de données.

8. Document selon la revendication 7, **caractérisé en ce que** l'appareil électronique est un transpondeur.

9. Document selon l'une quelconque des revendications précédentes, dans lequel la modification de l'état de commutation est réversible.

10. Document selon l'une quelconque des revendications précédentes, comprenant un ou plusieurs documents partiels (100', 100", ...), dans lequel chaque document partiel est réalisé selon l'une quelconque des revendications précédentes, et dans lequel les secondes fréquences (F3, F4, F5, ...) des documents partiels sont espacées les unes des autres et de la seconde fréquence (F2) du document, et les premières fréquences (F1) du document et des documents partiels sont sensiblement identiques.

11. Document selon la revendication 10, dans lequel les secondes fréquences des documents partiels sont espacées les unes des autres selon une configuration prédéterminée.

12. Document selon la revendication 10 ou 11, dans lequel une indication (142) des secondes fréquences des documents partiels est stockée dans la mémoire de données (106) du document

13. Document selon la revendication 12, dans lequel des métadonnées associées aux secondes fréquences sont stockées dans la mémoire de données (106).

14. Document selon l'une quelconque des revendications 10 à 13 précédentes, **caractérisé en ce qu'**il s'agit d'un passeport et dans lequel ledit au moins une document partiel est un visa du passeport.

15. Système comprenant au moins une étiquette radio et comprenant un dispositif destinés à accéder à ladite au moins une étiquette radio,
dans lequel ladite au moins une étiquette radio comporte :
- un appareil électronique (102), l'appareil électronique comportant une mémoire de données électronique (106),
- une première antenne (104) destinée à transmettre des données à une première fréquence (F1),
- un dispositif de commutation, (108) comprenant un élément de commutation (114), dans lequel, dans un premier état de commutation ouvert du dispositif de commutation, la transmission de données n'est pas possible et dans un second état de commutation fermé du dispositif de commutation, la transmission de données est possible,
- une seconde antenne (136) destinée à recevoir un signal à une seconde fréquence pour modifier l'état de commutation du dispositif de commutation,
dans lequel les première et seconde antennes sont conçues de telle manière que les première et seconde fréquences soient espacées l'une de l'autre,
dans lequel l'appareil électronique est connecté à la première antenne par l'intermédiaire de trajets conducteurs (110, 112),
dans lequel l'un des trajets conducteurs est interrompu par l'élément de commutation dans le premier état de commutation ouvert de manière à ce que l'appareil électronique soit désactivé en raison du fait qu'il est séparé de la première antenne (104) et qu'un accès à la mémoire de données (106) n'est pas possible, et dans lequel l'appareil électronique est connecté à la première antenne dans le second état de commutation fermé de manière à ce que l'appareil électronique soit activé,
dans lequel le dispositif comprend :
- une première antenne (120) destinée à lire ladite au moins une étiquette radio à une première fréquence (F1),
- une seconde antenne (122) destinée à émettre un signal à une seconde fréquence (F2, F3, F4, F5, ...) pour sélectionner ladite au moins une étiquette radio parmi une pluralité d'étiquettes radio (102', 102", ...), dans lequel à chaque étiquette radio de la pluralité d'étiquettes radio est associée une seconde fréquence, dans lequel les secondes fréquences (F2, F3, F4, F5, ...) des étiquettes radio sont espacées les unes des autres et de la première fréquence.

16. Système selon la revendication 15, dans lequel la seconde antenne du dispositif est conçue pour émettre le signal à l'une, à plusieurs ou à la totalité des secondes fréquences (F2, F3, F4, F5, ...).

17. Système selon la revendication 15 ou 16, dans lequel la première antenne du dispositif est réalisée sous la forme d'une interface de carte à puce.

18. procédé d'accès à une étiquette radio à une première fréquence (F1), dans lequel une seconde fréquence (F2, F3, F4, F5, ...) est associée à la seconde fréquence, l'étiquette radio comportant :
- un appareil électronique (102) comportant une mémoire de données électronique (106),
- une première antenne (104) destinée à la transmettre des données à une première fréquence (F1),
- un dispositif de commutation (108) comprenant un élément de commutation (114), dans lequel, dans un premier état de commutation ouvert du dispositif de commutation, une transmission de données à la première fréquence n'est pas possible,
- une seconde antenne (136) destinée à recevoir un signal à une seconde fréquence pour modifier l'état de commutation du dispositif de commutation,
dans lequel les première et seconde antennes sont conçues de telle manière que les première et seconde fréquences soient espacées l'une de l'autre,
dans lequel l'appareil électronique est connecté à la première antenne par l'intermédiaire de trajets conducteurs (110, 112), dans lequel l'un des trajets conducteurs est interrompu par l'élément de commutation dans le premier état de commutation ouvert de manière à ce que l'appareil électronique soit désactivé en raison du fait qu'il est séparé de la première antenne (104) et qu'un accès à la mémoire de données (106) n'est pas possible,
comprenant les étapes suivantes :
- sélection de l'étiquette radio par émission d'un signal à la seconde fréquence,
- modification de l'état de commutation du dispositif de commutation après réception du signal émis, d'où il résulte que le dispositif de commutation passe dans un second état de commutation fermé du dispositif de commutation, l'appareil électronique étant connecté à la première antenne dans le second état de commutation fermé de manière à ce que l'appareil électronique soit activé, et la transmission de données étant possible dans le second état de commutation,
- lecture de l'étiquette radio à la première fréquence.

19. Produit de programme informatique comportant des instructions pouvant être exécutées par un processeur pour mettre en oeuvre un procédé selon la revendication 18.
